# EUROPÄISCHE PATENTANMELDUNG

(11) **EP 4 552 923 A1**
(43) Veröffentlichungstag der Anmeldung: **14.05.2025**
(21) Anmeldenummer: 24211512.9
(22) Anmeldetag: 07.11.2024
(51) Int. Cl.: B60P 7/08

(54) **LADUNGSSICHERUNGSSYSTEM UND VERFAHREN ZUM SICHERN VON LADEGUT MITTELS DES LADUNGSSICHERUNGSSYSTEMS**

(30) Priorität: 10.11.2023 DE 102023131339
(71) Anmelder: allsafe GmbH & Co. KG, 78234 Engen (DE)
(72) Erfinder: HEIZMANN, Marius, 78234 Engen (DE); FEUCHT, Lothar, 78234 Engen (DE)
(74) Vertreter: Patentanwälte und Rechtsanwalt Weiß, Arat & Partner mbB

(57) **Zusammenfassung**

Die vorliegende Erfindung betrifft ein Ladungssicherungssystem zum Sichern wenigstens eines zu transportierenden Ladegutes auf oder an einem Transportmittel, wobei das Ladungssicherungssystem zumindest ein Befestigungselement zumindest zum Anordnen des Ladegutes an das Ladungssicherungssystem und ein Schienenelement zumindest zum Anordnen des Ladungssicherungssystems an dem Transportmittel umfasst, und wobei das Befestigungselement einen mit dem Ladegut mittelbar oder unmittelbar verbindbaren Halteabschnitt und einen mit dem Schienenelement unmittelbar verbindbaren Einrastabschnitt aufweist, wobei der Einrastabschnitt zumindest ein Federelement zum Selbstsichern des Befestigungselementes in dem Schienenelement umfasst. Erfindungsgemäß weist das Schienenelement eine derart gering dimensionierte maximale Breite, insbesondere eine maximale Breite von 20 mm, auf, dass ein nachrüstbarer Einbau des Ladungssicherungssystems bei geringem Platzangebot und/oder an bestehenden Fahrzeugeinrichtungen ermöglicht ist. Ferner betrifft die Erfindung ein Verfahren zum Sichern von wenigstens einem zu transportierenden Ladegut auf oder an einem Transportmittel mittels eines erfindungsgemäßen Ladungssicherungssystems.

## Beschreibung

Die vorliegende Erfindung betrifft ein Ladungssicherungssystem sowie ein Verfahren zum Sichern von Ladegut mittels des Ladungssicherungssystems.

### STAND DER TECHNIK

Die Sicherung von Ladegut in oder an einem Transportmittel, wie insbesondere in Laderäumen von Lastkraftwagen oder Transportflugzeugen oder auch Schiffen oder Zügen wird allgemein bekannt durch eine Vielzahl an technischen Lösungen ermöglicht. So dienen beispielsweise Stangen oder Balken, vertikal und horizontal innerhalb des Laderaumes montiert, dazu, ein Verrutschen von Ladegut zu verhindern. Des Weiteren werden beispielsweise auch Fittinge, Gurte und Netze zum Sichern von Ladegut verwendet.

Die DE19962810A1 zeigt beispielsweise eine Fixiervorrichtung für die Sicherung von Rollcontainern im Inneren eines LKW-Aufbaus. Diese Fixiervorrichtung besteht aus einer allgemein bekannten Airline-Schiene mit kreisförmigen Durchbrechungen und einem Haltehaken mit vier pilzförmigen Vorsprüngen sowie einem zylindrischen Haltestift, um den Haltehaken in der Airline-Schiene zu fixieren. Gelangt der Haltestift beim Einbringen des Haltehakens in die Nut der Airline-Schiene fluchtend zu einer Durchbrechung wird mittels einer Federkraft der Haltestift in diese Durchbrechung gedrückt. Die Vorsprünge liegen dann in einem Bereich der Airline-Schiene ohne Durchbrechungen. Um den Haltestift wieder zu lösen, muss dieser gegen die Federkraft aus der Durchbrechung zurückgezogen werden. Hierfür ist eine gesonderte Handhabe erforderlich. Die Fixierung des Haltehakens in der Airline-Schiene erfolgt demnach vorrangig über den einzelnen Haltestift, welcher nur durch die Betätigung eines separaten Vorrichtungselementes wieder gelöst werden kann. Auch ist der gesamte Aufbau des Haltehakens für das Sichern schwerer Lasten, wie das Sichern von Containern, ausgelegt und folglich entsprechend schwergewichtig und groß dimensioniert. Eine Verwendung dieser Fixiervorrichtung in Laderäumen oder auf Ladeflächen mit nur geringer räumlicher Dimensionierung gestaltet sich demnach schwierig.

### OFFENBARUNG DER ERFINDUNG

Es ist daher die Aufgabe der vorliegenden Erfindung, die voranstehend beschriebenen Nachteile bei einer Vorrichtung zum Sichern von Ladegut zumindest teilweise zu beheben. Insbesondere ist es die Aufgabe der vorliegenden Erfindung ein Ladungssicherungssystem sowie ein Verfahren zum Sichern von Ladegut mittels des Ladungssicherungssystems zu schaffen, wobei das Ladungssicherungssystem auf eine einfache und kostengünstige Art und Weise nachrüstbar auch an bestehende Fahrzeugeinrichtungen oder in klein dimensionierten Laderäumen bzw. auf klein dimensionierten Ladeflächen von Transportmitteln mit geringem Platzangebot und/oder geringen Gewichtsvorgaben angeordnet werden können und gleichzeitig bedienerfreundlich sind.

Die voranstehende Aufgabe wird gelöst durch ein Ladungssicherungssystem zum Sichern wenigstens eines zu transportierenden Ladegutes mit den Merkmalen des Anspruchs 1 sowie durch ein Verfahren zum Sichern von Ladegut mittels des Ladungssicherungssystems mit den Merkmalen gemäß Anspruch 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Ladungssicherungssystem beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Das erfindungsgemäße Ladungssicherungssystem zum Sichern wenigstens eines zu transportierenden Ladegutes auf oder an einem Transportmittel umfasst wenigstens ein Befestigungselement zumindest zum Anordnen des Ladegutes an das Ladungssicherungssystem und ein Schienenelement zumindest zum Anordnen des Ladungssicherungssystems an dem Transportmittel. Das Befestigungselement weist einen mit dem Ladegut mittelbar oder unmittelbar verbindbaren Halteabschnitt und einen mit dem Schienenelement unmittelbar verbindbaren Einrastabschnitt auf, wobei der Einrastabschnitt zumindest ein Federelement zum Selbstsichern des Befestigungselementes in dem Schienenelement umfasst. Des Weiteren weist das Schienenelement eine derart gering dimensionierte maximale Breite, insbesondere eine maximale Breite von 20 mm, auf, dass ein nachrüstbarer Einbau des Ladungssicherungssystems beispielsweise bei geringem Platzangebot und/oder an bestehenden Fahrzeugeinrichtungen ermöglicht ist.

Als Transportmittel werden im Rahmen der Erfindung alle bekannten Fahrzeuge, wie beispielsweise Straßenfahrzeuge, sprich Pkw, Lkw, Transporter sowie auch Zweiräder (bzw. Dreiräder), wie Fahrräder, insbesondere vorteilhaft sogenannte Cargo Bikes oder Motorräder verstanden. Ebenso kann das erfindungsgemäße Ladungssicherungssystem in Luftfahrzeugen, wie Flugzeugen, Helikoptern oder auch Drohnen, wie insbesondere Transportdrohnen zum Einsatz gelangen. Ebenfalls ist der Einsatz des erfindungsgemäßen Ladungssicherungssystems bei Wasserfahrzeugen, wie Schiffen, Booten, Jetskis etc. denkbar. Dank der geringen Maße des Schienenelementes sowie des Befestigungselementes und des ebenfalls geringen Bauteilgewichtes des gesamten Ladungssicherungssystems ist ein Anbau bzw. Einbau des erfindungsgemäßen Ladungssicherungssystem an bzw. in nahezu allen Bereichen und Flächen von bekannten Transportmitteln denkbar.

Es ist zudem denkbar, dass mehr als ein Befestigungselement, insbesondere zwei oder mehr Befestigungselemente an einem Schienenelement angeordnet sind. Hierdurch wird beispielsweise die Anzahl der zu befestigenden Ladegutstücke pro Schiene entsprechend erhöht. Das Schienenelement des Ladungssicherungssystems dient dazu das Ladungssicherungssystem mit einer Wandung, einer Decke, einem Boden oder einem vergleichbaren Abschnitt eines Laderaumes oder einer Ladefläche eines Transportmittels zu verbinden. Dank der kleinen Maße und des geringen Gewichtes des erfindungsgemäßen Ladungssicherungssystems ist es jedoch auch denkbar, dass das Ladungssicherungssystem an bereits bestehendem Interior, insbesondere an Fahrzeugeinrichtungen, insbesondere an beispielsweise den Stirnseiten von Fahrzeugeinrichtungen, wie Schränken, Regalen usw. angeordnet, insbesondere nachgerüstet ist. Das bedeutet, dass das erfindungsgemäße Ladungssicherungssystem derart dimensioniert und konfiguriert ist, dass auch eine nachträgliche Installation an bereits bestehenden Fahrzeugeinrichtungen jederzeit problemfrei ermöglicht ist. Hierdurch ist es vorteilhaft möglich zusätzlich zu dem mittels der Fahrzeugeinrichtung transportiertem Ladegut, wie Werkzeuge, Materialien etc. weiteres Ladegut zumindest zeitweise derart vor der Fahrzeugeinrichtung zu platzieren und über das erfindungsgemäße Ladungssicherungssystem mit der Fahrzeugeinrichtung zu verbinden, dass dieses verrutschsicher innerhalb ein und desselben Laderaumes bzw. auf ein und derselben Ladefläche transportiert werden kann. Beispielsweise kann ein Installateur ein zu installierendes Waschbecken derart gesichert beschädigungsfrei zum Kunden transportieren ohne zusätzliche Ladefläche zu benötigen. Des Weiteren ermöglicht das erfindungsgemäße Ladungssicherungssystem auch eine Anordnung oder Nachrüstung an beispielsweise Transportmitteln mit lediglich geringer Zuladung, wie Cargo Bikes oder Transportdrohnen.

Das Schienenelement weist vorteilhaft eine Breite von maximal 20 mm, besonders vorteilhaft von maximal 18 mm auf. Es ist jedoch auch denkbar, dass Breiten von weniger als 18 mm realisiert werden, um besonders klein dimensionierte Einbaulagen zu ermöglichen. Die Ausgestaltung des Befestigungselementes hinsichtlich dessen Maße ist entsprechend an die Größe, insbesondere Breite des Schienenelementes angepasst.

Das Befestigungselement des erfindungsgemäßen Ladungssicherungssystem umfasst einen Halteabschnitt und einen Einrastabschnitt. Der Halteabschnitt dient dazu das zu transportierende Ladegut mit dem Ladungssicherungssystem zu verbinden. Dabei kann das Ladegut unmittelbar, also ohne weitere Ladungssicherung mit dem Halteabschnitt verbunden sein oder mittelbar, über beispielsweise zusätzliche Gurte oder Netze etc. Der Einrastabschnitt ist erfindungsgemäß unmittelbar mit dem Schienenelement verbunden bzw. greift zumindest abschnittsweise in das Schienenelement ein. Hierdurch ist eine direkte Verbindung zwischen Schienenelement und Befestigungselement ermöglicht. Das Schienenelement besteht vorteilhaft aus einem leichten Metallwerkstoff, wie insbesondere Aluminium. Das Halteelement besteht vorteilhaft aus einem Kunststoffwerkstoff. Es ist des Weiteren denkbar, dass das Schienenelement alternativ aus einem faserverstärktem Kunststoff besteht bzw. Anteile aus faserverstärkten Kunststoff aufweist, um das Gewicht des Schienenelementes zu reduzieren.

Gemäß einer Ausführungsform umfasst das Schienenelement eine Systemfräsung aufweisend eine sich zumindest abschnittsweise erstreckende hinterschnittene Längsnut mit zueinander ausgerichteten Hinterschnittwandungen sowie eine Mehrzahl an zueinander in Längsrichtung des Schienenelementes gleich beabstandet im Bereich zumindest einer der Hinterschnittwandungen ausgebildeten Rastausnehmungen. Im Querschnitt zeigt die hinterschnittene Längsnut eine im Wesentliche kopfständige T-förmige Gestalt. Die Hinterschnittwandungen erstrecken sich in einer Ebene zueinander, wobei die Spalte der Längsnut die Hinterschnittwandungen voneinander beabstandet. Die Rastausnehmungen sind, in Längsrichtung des Schienenelementes betrachtet, vorteilhaft in einem jeweiligen Abstand von ca. 20 mm ausgebildet. Es ist jedoch auch denkbar, dass der Abstand zwischen zwei in Schienenelementlängsrichtung zueinander beabstandeten Rastausnehmungen weniger als 20 mm, beispielsweise 15 mm oder 10 mm beträgt. Jede Rastausnehmung weist vorteilhaft eine halbkreisförmige Gestalt auf. Vorteilhaft haben die Rastausnehmungen einen Radius von maximal 10 mm, besonders vorteilhaft von maximal 8 mm.

Des Weiteren ist es möglich, dass oben beschriebene Ratsausnehmungen an beiden Hinterschnittwandungen des Schienenelementes ausgebildet sind. In diesem Fall liegen sich vorteilhaft jeweils zwei Rastausnehmungen, in Schienenelementbreitenrichtung betrachtet, gegenüber. Das bedeutet, dass eine Mehrzahl an Rastausnehmungen auf einer Hinterschnittwandung und eine entsprechend gleiche Anzahl an Rastausnehmungen auf der anderen Hinterschnittwandung jeweils einander gegenüberliegend ausgebildet sind. Die einander gegenüberliegenden Rastausnehmungen bilden jeweils ein Rastausnehmungspaar. Das Rastausnehmungspaar weist die Gestalt eines Langloches auf.

Es ist des Weiteren denkbar, dass die Systemfräsung zudem einen Einführbereich aufweist. Der Einführbereich ist frei von Rastausnehmungen. Der Einführbereich weist entweder eine verringert ausgeführte hinterschnittene Längsnut oder eine Längsnut ohne Hinterschnitt auf. Bei einer verringert ausgeführten hinterschnittenen Längsnut ragen die Hinterschnittwandungen lediglich marginal, also im Vergleich zu den Hinterschnittwandungen der hinterschnittenen Längsnut verringert über die Längsnut und sind folglich, in der Erstreckungsebene der Hinterschnittwandungen betrachtet, weiter voneinander beabstandet als die Hinterschnittwandungen bei der hinterschnittenen Längsnut. Dies ermöglicht vorteilhaft ein einfaches Einsetzen des Halteelementes in die Längsnut der Schiene.

Gemäß einer vorteilhaften Ausführungsform sind der Einrastabschnitt und der Halteabschnitt einstückig ausgebildet. Es ist jedoch auch denkbar, dass der Einrastabschnitt und der Halteabschnitt einteilig ausgebildet sind. Beide Abschnitte können bei einteiliger Ausbildung entweder einen gleichen oder vergleichbaren oder einen unterschiedlichen Werkstoff bzw. eine gleiche oder vergleichbare oder eine unterschiedliche Werkstoffkombination aufweisen. Des Weiteren ist der Einrastabschnitt innerhalb der Systemfräsung zumindest abschnittsweise und zumindest zeitweise gleitend beweglich oder arretiert angeordnet. Der Einrastabschnitt ist demnach vorteilhaft zumindest abschnittsweise innerhalb der hinterschnittenen Längsnut angeordnet, wenn der Halteabschnitt an bzw. zumindest abschnittsweise in der Schiene positioniert ist.

Vorteilhafterweise weist der Einrastabschnitt wenigstens eine Eingriffswandung, zumindest eine sich zumindest abschnittsweise von der Eingriffswandung weg erstreckende Einrastnase sowie jeweils einen sich von den sich gegenüberliegenden Außenseiten der Eingriffswandung weg erstreckenden Gleitschuh-Vorsprung auf. Es ist denkbar, dass mehr als eine Einrastnase, insbesondere zwei oder mehr Einrastnasen ausgebildet sind. Die wenigstens eine Einrastnase ist dabei vorteilhaft einstückig mit der Eingriffswandung des Einrastabschnittes ausgebildet. Es ist jedoch auch denkbar, dass die wenigstens eine Einrastnase einteilig mit der Eingriffswandung ausgebildet ist. Bei einer einteiligen Ausbildung ist es denkbar, dass die wenigstens eine Eingriffsnase und die Eingriffswandung einen gleichen oder vergleichbaren oder einen unterschiedlichen Werkstoff bzw. eine gleiche oder vergleichbare oder eine unterschiedliche Werkstoffkombination aufweisen.

Gemäß einer vorteilhaften Ausführungsform ist ein Einrastnasen -Paar bestehend aus zwei Einrastnasen derart ausgebildet, dass die beiden Einrastnasen des Einrastnasen -Paares jeweils an sich gegenüberliegenden Außenseiten der Eingriffswandung angeordnet sind. Es ist des Weiteren denkbar, dass zwei oder mehr Einrastnasen -Paare sich von der Eingriffswandung, insbesondere von den Außenseiten der Eingriffswandung weg erstrecken. Vorteilhaft sind die jeweiligen Eingriffsnasen-Paare gleich zueinander beabstandet entlang der Eingriffswandung in Befestigungselementlängsrichtung verteilt ausgebildet.

Es ist ebenso denkbar, dass die wenigstens eine Einrastnase eine zur geometrischen Ausgestaltung der Rastausnehmungen des Schienenelementes geometrisch angepasste Form aufweist. Jedoch kann die geometrische Ausgestaltung der wenigstens einen Einrastnase auch zur Rastausnehmung abweichend ausgestaltet ist. Bei abweichender Ausgestaltung ist es jedoch erforderlich, dass die wenigstens eine Einrastnase zumindest eine derartig dimensionierte Größe aufweist, dass die wenigstens eine Einrastnase in eine Rastausnehmung des Schienenelementes eingreifen kann. Vorteilhaft dient die wenigstens eine Einrastnase bzw. das wenigstens eine Einrastnase-Paar dazu beim Fixieren des Befestigungselementes in bzw. an dem Schienenelement in die entsprechende(n) Rastausnehmung(en) einzugreifen. Bei einem Eingreifen kontaktiert die wenigstens ein Einrastnase bzw. jede Einrastnase des wenigstens einen Einrastnasen-Paares die Wandung der entsprechenden Rastausnehmung zumindest abschnittsweise. Vorteilhaft wird durch ein derartiges Eingreifen bzw. Einrasten bzw. Einbringen der Einrastnase(n) in die Rastausnehmung(en) ein ungewolltes Verschieben des Befestigungselementes entlang der Längsnut des Schienenelementes verhindert.

Gemäß einer weiteren Ausführungsform ist der Gleitschuh-Vorsprung an einem (freien) distalen Ende der Eingriffswandung ausgebildet, welches dem distalen Ende gegenüberliegt, dass den Halteabschnitt des Befestigungselementes kontaktiert, wobei sich der Gleitschuh-Vorsprung zumindest abschnittsweise orthogonal von der Außenseite der Eingriffswandung derart weit weg erstreckt, dass der Gleitschuh-Vorsprung die entsprechende Hinterschnittwandung der hinterschnittenen Längsnut hintergreift. Ein Gleitschuh-Vorsprung erstreckt sich demnach vorteilhaft zu beiden Seiten, insbesondere Außenseiten der Eingriffswandung zumindest in Befestigungselementlängsrichtung betrachtet zumindest abschnittsweise entlang der Eingriffswandung. Das bedeutet, dass der Gleitschuh-Vorsprung sich entweder entlang eines Abschnittes der Eingriffswandung in Befestigungselementlängsrichtung oder unterbrochen in mehr als einem, insbesondere zwei oder mehr Abschnitten, oder entlang der gesamten Eingriffswandung erstreckt. Vorteilhaft weist das Befestigungselement zwei Gleitschuh-Vorsprünge auf, wobei jeweils ein Gleitschuh-Vorsprung entlang einer Außenseite der Eingriffswandung ausgebildet ist. Der Gleitschuh-Vorsprung ist vorteilhaft einstückig mit der Eingriffswandung ausgebildet. Es ist jedoch auch denkbar, dass der Gleitschuh-Vorsprung einteilig mit Eingriffswandung ausgebildet ist. Bei einer einteiligen Ausbildung können der Gleitschuh-Vorsprung und die Eingriffswandung einen gleichen oder vergleichbaren oder einen unterschiedlichen Werkstoff bzw. eine gleiche oder vergleichbare oder eine unterschiedliche Werkstoffkombination aufweisen. Durch das Hintergreifen des jeweiligen Gleitschuh-Vorsprunges in die entsprechende Hinterschneidung der Längsnut des Schienenelementes, also unter die entsprechende Hinterschnittwandungen, wird ein ungewolltes Hausausfallen bzw. eine ungewollte Entnahme und damit ein ungewollter Verlust des Befestigungselementes aus dem Schienenelement verhindert.

Es ist des Weiteren denkbar, dass sich die wenigstens eine Einrastnase zumindest abschnittsweise orthogonal von einer Außenseite der Eingriffswandung in einem zwischen dem Gleitschuh-Vorsprung und dem Halteabschnitt befindlichen Abschnitt der Eingriffswandung weg erstreckt. Demnach ist die wenigstens eine Einrastnase in Befestigungselementhöhenrichtung betrachtet zwischen dem Gleitschuh-Vorsprung bzw. dem Abschnitt, an dem der Gleitschuh-Vorsprung zumindest abschnittsweise ausgebildet ist und dem Halteabschnitt bzw. dem Bereich des Befestigungselementes, in welchem der Halteabschnitt ausgebildet ist, positioniert bzw. ausgebildet. Hierdurch wird sichergestellt, dass die wenigstens eine Einrastnase in Eingriff mit einer definierten Rastausnehmung gelangen kann, bevor oder während die jeweiligen Gleitschuh-Vorsprünge die Hinterschnittwandung kontaktieren, um eine weitere Bewegung des Befestigungselementes orthogonal zur Längsnut, aus der Längsnut heraus, zu verhindern. Es ist denkbar, dass zumindest ein Gleitschuh-Vorsprung und die wenigstens eine Einrastnase derart positioniert ausgebildet sind, dass diese sich zumindest abschnittsweise kontaktieren.

Gemäß einer weiteren Ausführungsform weist das Befestigungselement wenigstens ein als Druckfederelement ausgebildetes Federelement, welches zumindest abschnittsweise innerhalb der Eingriffswandung des Einrastabschnittes angeordnet ist oder zwei als Blattfederelemente ausgebildete Federelemente, welche sich jeweils außerhalb der Eingriffswandung von der Eingriffswandung weg erstrecken, auf. Es ist ebenfalls denkbar, dass zwei oder mehr Federelemente, insbesondere Druckfederelemente zumindest abschnittsweise innerhalb der Eingriffswandung angeordnet sind. Das wenigstens eine Federelement erstreckt sich dabei vorteilhaft im Wesentlichen in Befestigungselementhöhenrichtung zumindest abschnittsweise innerhalb der Eingriffswandung des Einrastabschnittes. Vorteilhaft umschließt das wenigstens eine Druckfederelement einen Stift bzw. ein stiftförmiges bzw. bolzenförmiges Einsatzelement. Der Stift weist zumindest an einem distalen Ende (insbesondere dem distalen Ende, welches zumindest abschnittsweise und zumindest zeitweise aus der Eingriffswandung heraussteht, zumindest sofern das Befestigungselement nicht in das Schienenelement eingesetzt ist) eine abgerundete Kappe bzw. einen halbkugelförmigen Kontaktbereich auf. Die Kombination aus Stift und Druckfederelement bilden ein federgelagerten Stift, welcher folglich zumindest abschnittsweise innerhalb der Eingriffswandung, insbesondere erstreckend in Befestigungselementhöhenrichtung, angeordnet ist. Der wenigstens eine federgelagerte Stift oder die beiden Blattfederelemente dienen vorteilhaft dazu das in das Schienenelement eingesetzte Befestigungselement in Richtung der Hinterschnittwandungen, im Wesentlichen orthogonal zur Schienenlängsrichtung, aus der Längsnut heraus, zu drücken. Ein Herausdrücken des Befestigungselementes aus der Längsnut des Schienenelementes wird jedoch durch das Hintergreifen der ausgebildeten Gleitschuh-Vorsprünge in die Hinterschnitte der hinterschnittenen Längsnut und das dadurch erfolgende Kontaktieren der Gleitschuh-Vorsprünge an die Hinterschnittwandungen, welche eine Weiterbewegung des gesamten Befestigungselementes blockieren, verhindert. Bei einer Positionierung des Befestigungselementes an dem Schienenelement derart, dass auch die wenigstens eine Einrastnase in eine Rastausnehmung des Schienenelementes, insbesondere der Systemfräsung des Schienenelementes eingreift, entsteht eine Selbstsicherung des Befestigungselementes an dem Schienenelement. Die Federelemente bzw. der wenigsten eine gefederte bzw. federgelagerte Stift erzeugen selbsttätig (ohne weiteres Einwirken eines Nutzers) hinreichend Kraft, um das Befestigungselement, insbesondere die wenigstens eine Einrastnase des Einrastabschnittes derart in die Rastausnehmung zu drücken, dass eine ungewollte Verschiebung bzw. Bewegung des Befestigungselementes entlang der Längsnut des Schienenelementes verhindert ist.

Es ist des Weiteren im Rahmen der Erfindung denkbar, dass der Halteabschnitt des Befestigungselementes eine langlochförmige oder kreisförmige oder ovale Aussparung zur Anordnung eines Gurtbandes oder Hakens oder vergleichbarer Ladungssicherungselemente und/oder ein Gewinde und/oder Klemmmittel zur Anordnung eines Ladungssicherungselementes aufweist. Hierfür steht bei an dem Schienenelement angeordnetem Befestigungselement der Halteabschnitt zumindest abschnittsweise aus dem Schienenelement hervor, um vorteilhaft eine Anordnung weiterer Ladungssicherungselemente an dem Halteabschnitt in einfacher Art und Weise zu ermöglichen, ohne das Schienenelement zu beschädigen. Die Ausgestaltung des Halteelementes kann vielfältig sein, um die Anordnung verschiedenartiger Ladungssicherungselemente an dem Befestigungselement zu ermöglichen. Demnach ist es alternative denkbar, dass der Halteabschnitt bei einem am dem Schienenelement angeordneten Befestigungselement nicht aus dem Schienenelement hervorsteht. Es ist denkbar, dass der Halteabschnitt beispielsweise ein Bestandteil der Eingriffswandung ist. Der Halteabschnitt, insbesondere das Einrastelement kann dann beispielsweise ein Gewinde oder eine Gewindehülse aufweisen.

Es ist des Weiteren ein Verfahren zum Sichern von wenigstens einem zu transportierenden Ladegut auf oder an einem Transportmittel beansprucht. Das Verfahren umfasst zumindest die folgende Schritte:
- Anordnen, insbesondere Nachrüsten, des oben genannten Ladungssicherungssystems derart, dass
   - das Schienenelement mittelbar oder unmittelbar mit dem Transportmittel verbunden wird,
   - das Befestigungselement in das Schienenelement, insbesondere in die hinterschnittene Längsnut eingeschoben wird, wobei das Befestigungselement in Richtung des Bodens der hinterschnittenen Längsnut gegen eine Federkraft des wenigstens einen Federelementes mittels einer aufbrachten Druckkraft gedrückt und gleichzeitig entlang der hinterschnittenen Längsnut verschoben wird,
   - das Befestigungselement derart weit verschoben wird, bis die wenigstens eine Einrastnase unterhalb einer gewünschte Rastausnehmung sichtbar wird, und
   - die aufgebrachte Druckkraft derart verringert wird, dass die Federkraft des wenigstens einen Federelementes das Befestigungselement orthogonal zur Längsnut aus der Längsnut derart weit heraus bewegt, dass die wenigstens eine Einrastnase in die gewünschte Rastausnehmung eingreift, wobei die Gleitschuh-Vorsprünge zumindest abschnittsweise eine innenliegenden Fläche der Hinterschnittwandungen der hinterschnittenen Längsnut kontaktieren. Vorteilhaft ist es demnach in einfacher Art und Weise möglich das erfindungsgemäße Ladungssicherungssystem auch bei geringem Platzangebot an bzw. in einem Transportmittel anzuordnen, insbesondere nachzurüsten.

Es ist denkbar das Schienenelement an einer Wandung des Transportmittels, wie einer Wandung einer Ladefläche oder eines Laderaumes, insbesondere einem Boden, einer Decke etc. zu montieren. Ebenfalls ist es denkbar das Schienenelement, wie oben vorangehend aufgezeigt, an bereits bestehende Fahrzeugeinrichtungen, wie Schränke der Regale etc. zu montieren. Auch die Montage an Fahrzeugen wie Fahrräder, insbesondere Lastenfahrrädern oder sogenannten Cargo Bikes ist in einfacher Art und Weise möglich. Das erfindungsgemä-ße Ladungssicherungssystem kann vorteilhaft auch im Haushalt oder in Supermärkten oder Möbelhäusern etc. Anwendung finden. Es ist folglich überall dort einsetzbar, wo es erforderlich ist eine Ladung, wie Waren, Produkte, Kisten, Kästen usw. zu sichern, insbesondere in einer vorgegebenen und gewünschten Position zu arretieren bzw. zu fixieren. Insbesondere ist das erfindungsgemäße Ladungssicherungssystem einsetzbar in Bereichen mit geringem Platzangebot und gleichzeitig einem Erfordernis der Ladungssicherung mit hinreichender Sicherungskraft. Bei der Montage des Schienenelementes des Ladungssicherungssystems können bekannte Befestigungsmittel, wie Schraubverbindungen, Nietverbindungen (Blindnietverbindungen) etc. zur Anwendung gelangen.

Das Einsetzen des Befestigungselementes in das Schienenelement erfolgt vorteilhaft über das Ende des Schienenelementes selbst oder über einen Einführbereich, welcher als Bestandteil der Systemfräsung ausgebildet ist und bereits oben hinreichend erläutert wurde. Beim Einsetzen des Befestigungselementes in das Schienenelement wird vorteilhaft zumindest der Einrastabschnitt in die hinterschnittene Längsnut eingebracht. Hierfür übt der Nutzer (z.B. Monteur des Ladungssicherungssystems) eine geringe Druckkraft derart auf das Befestigungselement aus, dass die Blattfederelemente aufgespreizt werden bzw. dass der federgelagerte Stift in eine Bohrung des Befestigungselementes eingedrückt wird. Dadurch kann das Befestigungselement derart weit in die hinterschnittene Längsnut versenkt werden, dass auch die wenigstens eine Einrastnase unterhalb der Hinterschnittwandungen und innerhalb der hinterschnittenen Längsnut positioniert ist. Erst dann ist eine Verschiebung des Befestigungselementes in Schienenlängsrichtung entlang der Längsnut möglich. Hierzu bringt der Nutzer eine entsprechend Zug- oder Schubkraft auf das Befestigungselement auf. Das Befestigungselement wird so lange verschoben, bis eine gewünschte Position erreicht ist. Zum Arretieren des Befestigungselementes in bzw. an dem Schienenelement ist es zum einen möglich das Befestigungselement derart weit zu verschieben, bis die wenigstens eine Einrastnase unterhalb einer in deren Position geeigneten Rastausnehmung sichtbar wird. Nun kann der Nutzer die auf das Befestigungselement aufgebrachte Druckraft verringern, wodurch sich die Druckkraft des federgelagerten Stiftes oder der Blattfederelemente erhöht, sodass das Befestigungselement derart vom Längsnutgrund bzw. Längsnutboden wegbewegt wird und die wenigstens eine Einrastnase in die gewünschte Rastausnehmung hineingleitet. Zum anderen erfolgt eine im Wesentlichen selbständige Arretierung des Befestigungselementes in bzw. an dem Schienenelement, indem das in die hinterschnittene Nut eingebrachte Befestigungselement, beispielsweise durch ein Verrutschen während des Fahrbetriebes, selbständig entlang der hinterschnittenen Nut bis zur nächstgelegenen Rastausnehmung wandert. Sobald dann die wenigstens eine Einrastnase unterhalb der erreichten Rastausnehmung positioniert ist, entfällt der auf das Befestigungselement durch die Hinterschnittwandungen der hinterschnittenen Nut aufgebrachten Druckkraft und die wenigstens eine Einrastnase kann in die erreichte Rastausnehmung dank der existenten Federkraft des Federelementes hineingleiten. Sobald dies erfolgt ist, ist das Befestigungselement in dem Schienenelement fixiert.

Die Kraftübertragung zum Sichern von Ladegut erfolgt vorteilhaft direkt vom Halteelement in das Schienenelement. Zwischenelemente sind nicht erforderlich. Demnach weist das erfindungsgemäße Ladungssicherungssystem einen einfachen und kostengünstigen Aufbau auf.

Bei dem beschriebenen Verfahren ergeben sich sämtliche Vorteile, die bereits zu dem Ladungssicherungssystem gemäß dem ersten Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen eines erfindungsgemäßen Ladungssicherungssystems werden nachfolgend anhand von Zeichnungen näher erläutert. Es zeigen jeweils schematisch:
- Figur 1: in einer perspektivischen Ansicht eine Ausführungsform eines erfindungsgemäßen Ladungssicherungssystems,
- Figur 2: in einer Schnittdarstellung die in der Figur 1 gezeigte Ausführungsform eines erfindungsgemäßen Ladungssicherungssystems,
- Figur 3: in einer perspektivischen Ansicht eine Ausführungsform eines Befestigungselementes eines erfindungsgemäßen Ladungssicherungssystems,
- Figur 4: in einer Längsschnittdarstellung die in der Figur 3 gezeigte Ausführungsform eines Befestigungselementes eines erfindungsgemäßen Ladungssicherungssystems,
- Figur 5: in einer Querschnittdarstellung die in der Figur 3 gezeigte Ausführungsform eines Befestigungselementes sowie eines Schienenelementes eines erfindungsgemäßen Ladungssicherungssystems,
- Figur 6: in einer perspektivischen Ansicht eine weitere (zweite) Ausführungsform eines Befestigungselementes eines erfindungsgemäßen Ladungssicherungssystems,
- Figur 7: in einer perspektivischen Ansicht eine weitere (zweite) Ausführungsform eines erfindungsgemäßen Ladungssicherungssystems, und
- Figur 8: in einer Schnittdarstellung die in der Figur 7 gezeigte weitere (zweite) Ausführungsform eines erfindungsgemäßen Ladungssicherungssystems.

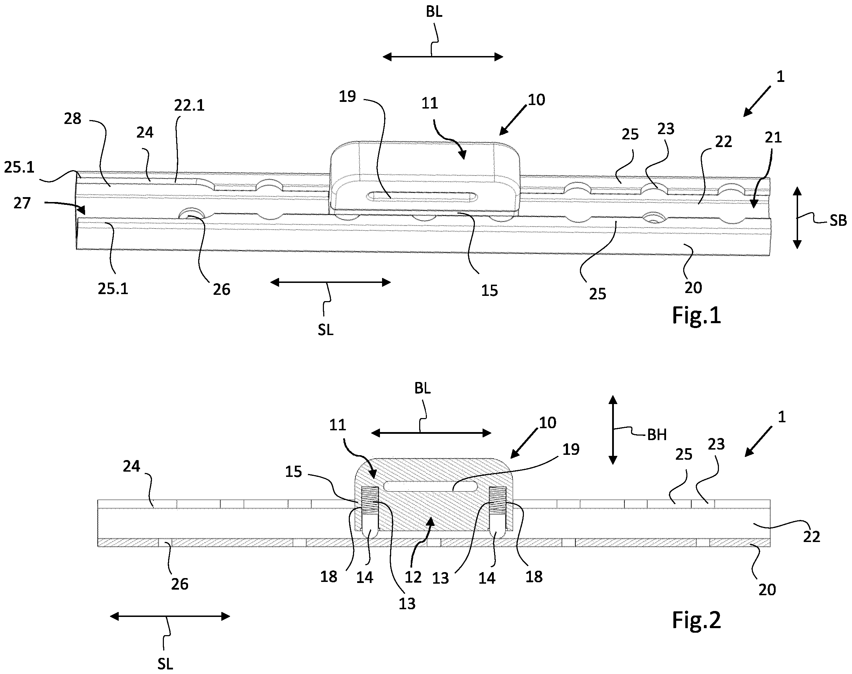

Elemente mit gleicher Funktion und Wirkungsweise sind in den Fig. 1 bis 8 jeweils mit denselben Bezugszeichen versehen.

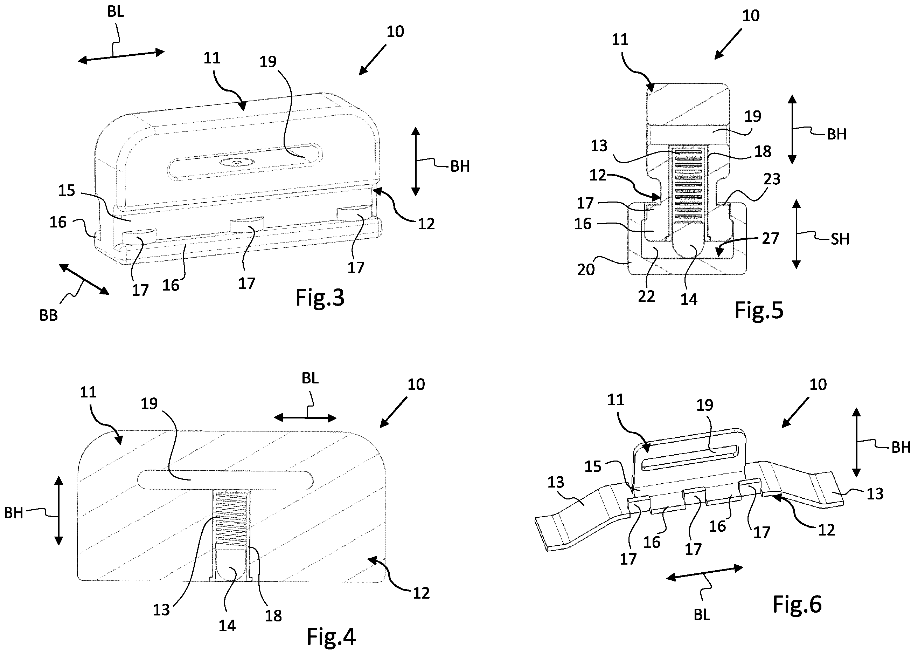

In den Figuren 1 und 2 ist schematisch eine (erste) Ausführungsform eines erfindungsgemäßen Ladungssicherungssystems 1 gezeigt, nämlich einmal in perspektivischer Ansicht (Figur 1) und einmal in einem Längsschnitt (Figur 2). Das in den Figuren 1 und 2 gezeigte Ladungssicherungssystem 1 weist ein Befestigungselement 10 und ein Schienenelement 20 auf. Das Befestigungselement 10 umfasst einen Halteabschnitt 11 sowie einen Einrastabschnitt 12, welcher insbesondere in der Figur 2 sichtbar ist. Vorteilhaft sind der Halteabschnitt 11 und der Einrastabschnitt 12 einstückig ausgebildet. Der Halteabschnitt 11 weist eine Aussparung 19 in geometrischer Gestalt eines Langloches auf, wobei auch abweichende Gestaltungen denkbar sind. Die Aussparung 19 dient vorteilhaft dazu weitere, hier nicht gezeigte, Ladungssicherungselemente, wie beispielsweise Gurte mit dem Befestigungselement 10 zu verbinden. Vorteilhaft erstreckt sich die Aussparung 19 vornehmlich in Befestigungselementlängsrichtung BL zur Erzeugung eines länglichen Schlitzes. Der Einrastabschnitt 12 weist zwei Bohrungen 18, insbesondere Sacklochbohrungen 18 auf, wie insbesondere in der Figur 2 deutlich zu erkennen ist. Die Sacklochbohrungen 18 erstrecken sich vornehmlich in Befestigungselementhöhenrichtung BH ausgehend von einem freien distalen Ende des Einrastabschnittes 12 in Richtung des Halteabschnittes 11 des Befestigungselementes 10 durch eine Eingriffswandung 15. Innerhalb einer jeweiligen Sacklochbohrung 18, ist ein Federelement 13, insbesondere ein Druckfederelemente 13 sowie ein Stift 14 angeordnet. Vorteilhaft ist das Federelement 13 zumindest abschnittsweise um einen Abschnitt des Stiftes 14 angeordnet bzw. umgreift den Stift 14 abschnittsweise. Der Stift 14 weist ein erstes distales Ende auf, welches in Richtung des Grundes der Sacklochbohrung ausgerichtet ist und ein zweites distales Ende, welches zumindest abschnittsweise und zumindest zeitweise aus dem Befestigungselement 10, insbesondere dem Einrastabschnitt 12 hervorschaut. Das zweite distale Ende weist eine abgerundete Form, insbesondere eine halbkugelförmige Gestalt auf. Zumindest zeitweise bedeutet im Rahmen der Erfindung, dass das zweite distale Ende des Stiftes 14 zumindest dann aus dem Befestigungselement 10 hervorsteht, wenn das Befestigungselement 10 entweder (noch) nicht in das Schienenelement 20 eingesetzt wurde oder wenn das Befestigungselement 10 in dem Schienenelement 20 fixiert bzw. arretiert ist. Die Positionierung der Sacklochbohrungen 18 und folglich der Federelemente 13 bzw. der gefedert gelagerten Stifte 14 kann variabel in Berücksichtigung der Ausgestaltung des Halteabschnittes 11 und der am oder im Halteabschnitt 11 erforderlichen Merkmale erfolgen. Vorteilhaft befinden sich die Sacklochbohrungen 18 jedoch in Befestigungselementlängsrichtung BL betrachtet beabstandet voneinander in Endbereichen des Befestigungselementes 10, insbesondere des Einrastabschnittes 12. Es ist des Weiteren denkbar, dass die Sacklochbohrungen 18 sich auch bis in den Halteabschnitt 11 erstrecken. Des Weiteren umfasst der Einrastabschnitt 12 wenigstens eine Einrastnase und Gleitschuh-Vorsprünge, welche jedoch in den Figuren 1 und 2 nur schemenhaft oder gar nicht zu sehen sind und folglich mit der Beschreibung zu den Figuren 3 und 4 im Detail erläutert werden.

Wie in den Figuren 1 und 2 ersichtlich, weist das Schienenelement 20 eine sich in Schienenelementlängsrichtung SL erstreckende hinterschnittene Längsnut 22 auf. Die Längsnut 22 ist ein Bestandteil einer Systemfräsung 21 des Schienenelementes 20. Die hinterschnittene Längsnut 22 umfasst folglich einen Längsnutgrund 27 oder auch Längsnutboden 27 genannt, sowie Längsnutseite 28, auch Längsnutseitenwandungen 28 genannt, sowie zwei Hinterschnittwandungen 25. Die Hinterschnittwandungen 25 sind insbesondere in Schienenelementbreitenrichtung SB betrachtet zueinander ausgerichtet und durch die Öffnung der Längsnut 22 voneinander beabstandet. Die Systemfräsung 21 umfasst zudem auch zumindest eine Rastausnehmung 23, vorteilhaft eine Mehrzahl an Rastausnehmungen 23, welche sich entlang der Schienenelementlängsrichtung SL im Wesentlichen gleich zueinander beabstandet entlang der hinterschnittenen Längsnut 22 verteilen. Die Rastausnehmungen 23 sind beispielsweise in geometrischer Gestalt eines Halbkreises in die entsprechende Hinterschnittwandung 25 ausgebildet. Vorteilhaft liegen sich immer zwei Rastausnehmungen 23 in Schienenelementbreitenrichtung SB betrachtet gegenüber, wobei folglich in jeder Hinterschnittwandung 25 eine Rastausnehmung 23 ausgebildet ist, die ein Rastausnehmungspaar bilden. Das Rastausnehmungspaar bildet gemeinsam betrachtet eine Art Langloch-Aussparung. Es ist des Weiteren denkbar, dass die Systemfräsung 21 auch einen Einführbereich 24 umfasst. Der Einführbereich 24 ist vorteilhaft an einem Endbereich des Schienenelementes 20 ausgebildet und dient für ein einfaches und prozesssicheres Einbringen des Befestigungselementes 10, insbesondere des Einrastabschnittes 12 in die Längsnut 22 des Schienenelementes 20. Der Einführbereich 24 ist frei von Rastausnehmungen 23. Der insbesondere in der Figur 1 deutlich sichtbare Einführbereich 24 weist einen verringert ausgeführten hinterschnittenen Längsnutabschnitt 22.1 auf, bei welchem sich die verringerten Hinterschnittwandungen 25.1 lediglich marginal im Vergleich zu den Hinterschnittwandungen 25 der hinterschnittenen Längsnut 22 zueinander erstrecken und demnach fast kaum eine Überdeckung der Längsnut 22 stattfindet. Die verringerten Hinterschnittwandungen 25.1 sind demnach auf ein fertigungstechnisch ermöglichendes Minimum reduziert. Dies ermöglicht vorteilhaft ein einfaches Einsetzen des Befestigungselementes 10, insbesondere des Einrastabschnittes 12 des Befestigungselementes 10 in die Längsnut 22 des Schienenelementes 20. Des Weiteren weist das Schienenelement 20 Bohrungen 26 auf. Die Bohrungen 26 sind im Längsnutgrund 27 eingebracht und dienen vorteilhaft dazu das Schienenelement 20 mit einementsprechenden Bestandteil des Transportmittels oder auch Einrichtungen des Transportmittels über beispielsweise eine Schraub- oder Stiftverbindung zu verbinden.

In den Figuren 3, 4 und 5 ist einmal in perspektivischen Ansicht (Figur 3), einmal in einer Längsschnittdarstellung (Figur 4) und einmal in einer Querschnittdarstellung (Figur 5) eine (erste) Ausführungsform eines Befestigungselementes 10 eines erfindungsgemäßen Ladungssicherungssystems gezeigt. Das in den Figuren 3, 4 und 5 gezeigte Befestigungselement 10 umfasst einen Halteabschnitt 11 sowie einen Einrastabschnitt 12. Vorteilhaft sind der Halteabschnitt 11 und der Einrastabschnitt 12 einstückig ausgebildet. Der Halteabschnitt 11 weist eine Aussparung 19 in geometrischer Gestalt eines Langloches auf, wobei auch abweichende Gestaltungen denkbar sind. Die Aussparung 19 dient vorteilhaft dazu weitere hier nicht gezeigte Ladungssicherungselemente, wie beispielsweise Gurte, mit dem Befestigungselement 10 zu verbinden. Vorteilhaft erstreckt sich die Aussparung 19 vornehmlich in Befestigungselementlängsrichtung BL zur Erzeugung eines länglichen Schlitzes. Der Einrastabschnitt 12 weist eine Bohrung 18 auf. Die Bohrung 18 erstreckt sich vornehmlich in Befestigungselementhöhenrichtung BH ausgehend von einem freien distalen Ende des Einrastabschnittes 12 in Richtung des Halteabschnittes 11 des Befestigungselementes 10 durch eine Eingriffswandung 15. Innerhalb der Bohrung 18, ist ein Federelemente 13, insbesondere ein Druckfederelemente 13 sowie ein Stift 14 angeordnet. Vorteilhaft ist das Federelement 13 zumindest abschnittsweise um einen Abschnitt des Stiftes 14 angeordnet bzw. umgreift den Stift 14 abschnittsweise. Der Stift 14 weist ein erstes distales Ende auf, welches in Richtung des Halteabschnittes 11 ausgerichtet ist und ein zweites distales Ende, welches zumindest abschnittsweise und zumindest zeitweise aus dem Befestigungselement 10, insbesondere dem Einrastabschnitt 12 hervorschaut. Das zweite distale Ende weist eine abgerundete Form, insbesondere eine halbkugelförmige Gestalt auf. Zumindest zeitweise bedeutet im Rahmen der Erfindung, dass das zweite distale Ende des Stiftes 14 zumindest dann aus dem Befestigungselement 10 hervorsteht, wenn das Befestigungselement 10 entweder (noch) nicht in das Schienenelement 20 eingesetzt wurde oder wenn das Befestigungselement 10 in dem Schienenelement 20 fixiert bzw. arretiert ist. Die Positionierung der Bohrung 18 und folglich des Federelementes 13 bzw. des gefedert gelagerten Stiftes 14 ist in Befestigungselementlängsrichtung BL betrachtet vornehmlich mittig. Es ist des Weiteren denkbar, dass die Bohrung 18 sich auch bis in den Halteabschnitt 10 erstrecken. Ebenfalls denkbar ist, dass die Bohrung, wie insbesondere in der Figur 3 gezeigt, auch im Halteabschnitt 11 sichtbar wird. In dieser Ausführungsform ist dann beispielsweise das obere Ende des Federelementes 14 (insbesondere beispielsweise der Federbolzen) erkennbar. Bei der Ausgestaltung einer Sacklochbohrung als Bohrung 18 wären keine Bestandteile des Federelementes 14 sichtbar. Des Weiteren umfasst der Einrastabschnitt 12 wenigstens eine Einrastnase 17 und Gleitschuh-Vorsprünge 16, wie insbesondere in der Figur 3 deutlich erkennbar ist.

Das in der Figur 3 gezeigte Befestigungselement 10 weist an dessen Einrastabschnitt 12 mindestens drei, vorteilhaft sechs Einrastnasen 17 auf, wobei in der Figur 3 lediglich drei Einrastnasen 17 sichtbar sind. Die Einrastnasen 17 erstrecken sich in Befestigungselementbreitenrichtung BB betrachtet von einer Außenseite der Eingriffswandung 15 weg. Die Einrastnasen 17 sind in geometrischer Gestalt einer Halbkreisscheibe ausgebildet, wobei auch andere geometrische Ausgestaltungen denkbar sind. Die Einrastnasen 17 sind in Befestigungselementlängsrichtung BL betrachtet vorteilhaft in gleichem Abstand beabstandet zueinander an der Eingriffswandung 15 ausgebildet. Der Abstand zwischen jeweils zwei einander nachfolgenden Einrastnasen 17 entspricht im Wesentlichen dem Abstand der in der Systemfräsung 21 des Schienenelementes 20 befindlichen Rastausnehmungen 23 (wie insbesondere in der Figur 1 ersichtlich). Dadurch wird vorteilhaft sichergestellt, dass beim Einbringen des Einrastabschnittes 12 in die Systemfräsung 21 des Schienenelementes 20, insbesondere in die hinterschnittene Längsnut 22, die Einrastnasen 17 des Befestigungselementes 10 in die Rastausnehmungen 23 des Schienenelementes 20 eingreifen können. Vorteilhaft weist ein Befestigungselement 10 auf beiden Seiten der Eingriffswandung 15 Einrastnasen 17 auf. Vorteilhaft bildet eine Einrastnase 17 an der einen Seite der Eingriffswandung 15 mit einer Einrastnase 17 auf der gegenüberliegenden Seite der Eingriffswandung 15 ein Einrastnasen-Paar. Die beiden Einrastnasen 17 des Einrastnasen-Paares liegen sich in Befestigungselementbreitenrichtung BB betrachtet folglich gegenüber.

Des Weiteren ist in der Figur 3 ein Gleitschuh-Vorsprung 16, insbesondere zwei Gleitschuh-Vorsprünge 16 gezeigt. Jeder Gleitschuh-Vorsprung 16 erstreckt sich im Wesentlichen vollständig in Befestigungselementlängsrichtung BL betrachtet entlang des Einrastabschnittes 12 und insbesondere an einem freien distalen Ende entlang der Eingriffswandung 15. Jeweils ein Gleitschuh-Vorsprung 16 erstreckt sich von einer Außenseite der Eingriffswandung 15 von dieser weg, insbesondere in Befestigungselementbreitenrichtung BB. Der Gleitschuh-Vorsprung 16 bzw. die Gleitschuh-Vorsprünge 16 dienen vorteilhaft zum einen dazu ein störungsfreies Gleiten des Befestigungselementes 10 innerhalb der hinterschnittenen Längsnut 22, wie insbesondere in der Figur 5 gezeigt, zu ermöglichen, sodass beispielsweise ein Verkanten oder vergleichbare Störungen beim Gleitvorgang ausgeschlossen sind. Zum anderen dient der Gleitschuh-Vorsprung 16 bzw. die Gleitschuh-Vorsprünge 16 dazu ein ungewolltes Herausfallen (Herausnehmen) des Befestigungselementes 10 aus der Längsnut 22 insbesondere in Schienenelementhöhenrichtung SH betrachtet (Richtung im Wesentlichen orthogonal zur Schienenelementlängsachse SL) zu verhindern. Hierfür sind die Gleitschuh-Vorsprünge 16 derart konzipiert bzw. geometrisch ausgebildet, dass diese beim Einbringen des Befestigungselementes 10, insbesondere des Einrastabschnittes 12 in die Längsnut 22, derart unter die Hinterschnittwandungen 25 eingreifen, dass diese bei Aufbringen einer Zugkraft von außen auf das Befestigungselement 10 an den Innenflächen der Hinterschnittwandungen 25 zum Anliegen kommen, wodurch eine weitere Bewegung in diese Richtung verhindert wird, wie in Figur 5 verdeutlicht. Des Weiteren zeigt sich in der Figur 5 das Eingreifen der Einrastnasen 17 des Befestigungselementes 10 in die Rastausnehmungen 23 des Schienenelementes 20 bei Dekomprimierung des (Druck-)Federelementes 13. Das Federelement 13 drückt den federgelagerten Stift 14 aus dessen Bohrung 18 zumindest abschnittsweise heraus. Der Stift 14 kontaktiert dann den Längsnutgrund 27 der Längsnut 22, wodurch das gesamte Befestigungselement 10 in eine Richtung weg vom Längsnutgrund 27 derart weit bewegt wird, bis die Gleitschuh-Vorsprünge 16 in Kontakt mit den Innenflächen der Hinterschnittwandungen 25 kommen. Das Federelement 13 bzw. der federgelagerte Stift 14 sorgen folglich für einen definierten Anpressdruck der Gleitschuh-Vorsprünge 16 an die Hinterschnittwandungen 25.

Die Gleitschuh-Vorsprünge 16 sowie auch die Einrastnasen 17 und die Federelemente 13 können auch eine andere (abweichende) Ausgestaltung aufweisen, wie beispielsweise eine weitere (zweite) Ausführungsform eines Befestigungselementes 10 eines erfindungsgemäßen Ladungssicherungssystems gemäß der Figur 6 zeigt. Das in perspektivische Ansicht in der Figur 6 dargestellte Befestigungselement 10 weist ebenfalls einen Halteabschnitt 11 und einen Einrastabschnitt 12 auf. Vorteilhaft sind der Halteabschnitt 11 und der Einrastabschnitt 12 einstückig ausgebildet. Der Halteabschnitt weist eine Aussparung 19 in geometrischer Gestalt eines Langloches auf, wobei auch abweichende Gestaltungen denkbar sind. Die Aussparung 19 dient vorteilhaft dazu weitere Ladungssicherungselemente, wie beispielsweise Gurte mit dem Befestigungselement zu verbinden. Vorteilhaft erstreckt sich die Aussparung 19 vornehmlich in Befestigungselementlängsrichtung BL zur Erzeugung eines länglichen Schlitzes. Der Einrastabschnitt 12 weist eine Eingriffswandung 15 auf. Im Wesentlichen orthogonal von der Eingriffswandung 15 weg erstreckt sich eine weitere durchbrochene Wandung, welche die Einrastnasen 17 und die Gleitschuh-Vorsprünge 16 umfasst, die sich einander abwechselnd in Befestigungselementlängsrichtung BL betrachtet ausgebildet sind. Die Einrastnasen 17 sind im Wesentlichen in Gestalt von aufgebogenen bzw. hochgebogenen Wandungsstücken gebildet. Die Einrastnasen 17 erstrecken sich demnach zumindest abschnittsweise parallel zu der Eingriffswandung 15, die sich wiederum in Befestigungselementhöhenrichtung BH erstreckt. Die Gleitschuh-Vorsprünge 16, die zwischen den Einrastnasen 17 ausgebildet sind, erstrecken sich demnach als verbliebene Wandungsstücke zumindest abschnittsweise orthogonal zu den Einrastnasen 17 von diesen nach außen von der Eingriffswandung 15 weg. Das Befestigungselement 10 gemäß der Figur 6 weist vornehmlich an lediglich einer Seite der Eingriffswandung 15 drei Einrastnasen 17 sowie zwei Gleitschuh-Vorsprünge 16 auf. Die gegenüberliegende Seite der Eingriffswandung 15 kann identisch gestaltet sein. Es ist jedoch auch denkbar, dass die gegenüberliegende Seite der Eingriffswandung 15 derart ausgestaltet ist, dass keine Einrastnasen ausgebildet sind. Vielmehr erstreckt sich eine hier folglich nicht durchbrochene Wandung im Wesentlichen orthogonal von der Eingriffswandung 15 in Gestalt eines im Wesentlichen durchgängigen Gleitschuh-Vorsprunges 16 weg. Die Anzahl an Einrastnasen 17 und Gleitschuh-Vorsprüngen 16 kann jedoch für jede Seite der Eingriffswandung 15 variieren.

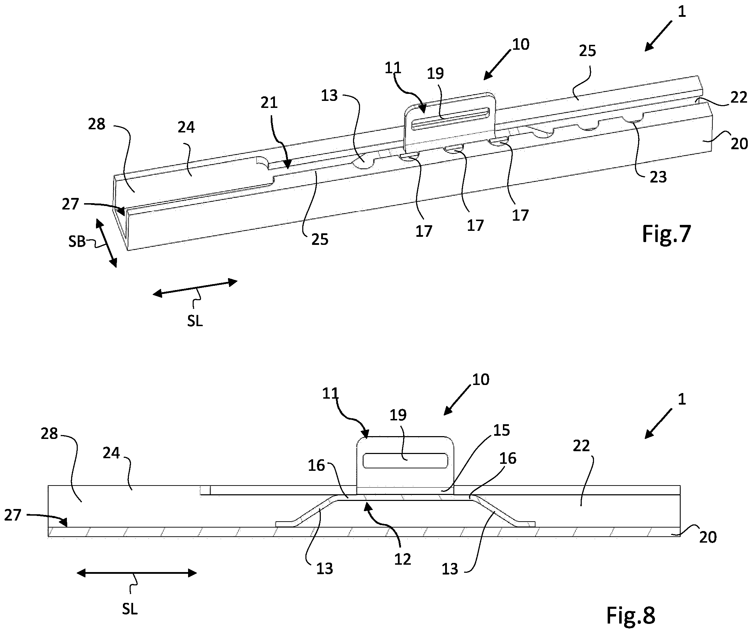

Des Weiteren weist das in der Figur 6 gezeigte Befestigungselement 10 zwei Federelemente 13, insbesondere zwei Blattfederelemente 13 auf, welche sich außerhalb der Eingriffswandung 15 befinden. Die Federelemente 13 erstrecken sich im Wesentlichen ausgehend von der Eingriffswandung 15 des Einrastabschnittes 12 in Befestigungselementlängsrichtung BL an beiden Endseiten des Einrastabschnittes 12 von diesem weg. Die Federelemente 13 sind derartige S-förmig ausgestaltet, dass ein distales Ende der S-Form beim Einbringen des Befestigungselementes 10 in die Längsnut 22 den Längsnutgrund 27 kontaktiert, während das andere distale Ende der S-Form an dem Befestigungselement 10, insbesondere im Bereich der Eingriffswandung 15 des Einrastabschnittes 12 angeordnet ist. Soll zumindest der Einrastabschnitt 12 des Befestigungselementes 10 in die Längsnut 22 des Schienenelementes 20 eingebracht werden, ist es erforderlich, dass der Nutzer eine Druckkraft gegen und höher als die Federkraft aufbringt, wodurch die Federelemente 13 derart gebogen werden, dass das erste distale (freie) Ende des S-förmigen Federelementes 13 in Befestigungselementhöhenrichtung BH betrachtet, nach oben bewegt wird, sodass es zumindest annähernd in einer Ebene (in Befestigungselementlängsrichtung BL betrachtet) liegt, wie das zweite distale Ende des S-förmigen Federelementes 13, welches an der Eingriffswandung 15 angeordnet ist. Reduziert der Nutzer die auf das Befestigungselement 10 aufgebrachte Druckkraft wieder, so wird, basierend auf der Federkraft der Federelemente 13, das in die Längsnut 22 des Schienenelementes 20 eingesetzte Befestigungselement 10 weg von dem Längsnutgrund 27 bewegt, bis die Gleitschuh- Vorsprünge 16 in Kontakt mit den Hinterschnittwandungen 25, insbesondere einer Innenseite der Hinterschnittwandungen 25 treten, wie dies beispielsweise in den nachfolgend noch näher erläuterten Figuren 7 und 8 aufgezeigt ist.

In den Figuren 7 und 8 ist eine weitere (zweite) Ausführungsform eines erfindungsgemäßen Ladungssicherungssystems 1 gezeigt, bei welchem insbesondere die in der Figur 6 gezeigte weitere (zweite) Ausführungsform eines Befestigungselementes 10 zur Anwendung gelangt. Vorteilhaft ist die weitere (zweite) Ausführungsform eines erfindungsgemäßen Ladungssicherungssystems 1 in der Figur 7 in einer perspektivischen Ansicht und in der Figur 8 in einer Schnittdarstellung gezeigt. Das in den Figuren 7 und 8 gezeigte Ladungssicherungssystem1 weist ein Schienenelement 20 sowie ein Befestigungselement 10 gemäß der Figur 6 auf, sodass die zur Figur 6 aufgeführten Erläuterungen hierzu vollumfänglich herangezogen werden beziehungsweise werden können. Das Schienenelement 20 weist eine sich in Schienenelementlängsrichtung SL erstreckende hinterschnittene Längsnut 22 auf. Die Längsnut 22 ist ein Bestandteil einer Systemfräsung 21 des Schienenelementes 20. Die hinterschnittene Längsnut 22 umfasst folglich einen Längsnutgrund 27 oder auch Längsnutboden 27 genannt, sowie Längsnutseiten 28, auch Längsnutseitenwandungen 28 genannt, sowie zwei Hinterschnittwandungen 25. Die Hinterschnittwandungen 25 sind insbesondere in Schienenelementbreitenrichtung SB betrachtet zueinander ausgerichtet und durch die Öffnung der Längsnut 22 voneinander beabstandet. Die Systemfräsung 21 umfasst zudem auch zumindest eine Rastausnehmung 23, vorteilhaft eine Mehrzahl an Rastausnehmungen 23, welche sich entlang der Schienenelementlängsrichtung SL im Wesentlichen gleich zueinander beabstandet entlang der hinterschnittenen Längsnut 22 verteilen. Die Rastausnehmungen 23 sind beispielsweise in geometrischer Gestalt eines Halbkreises in die entsprechende Hinterschnittwandung 25 ausgebildet. Abweichend zu dem in den Figuren 1 und 2 aufgeführten Schienenelement 20 weist das in den Figuren 7 und 8 aufgezeigte Schienenelement 20 keine zwei sich immer in Schienenelementbreitenrichtung SB betrachtet gegenüber liegenden Rastausnehmungen 23 zur Bildung eines Rastausnehmungspaares auf. Vorteilhaft weist das in den Figuren 7 und 8 gezeigte Schienenelement 20 lediglich Rastausnehmungen 23 im Bereich einer (einzigen) Hinterschnittwandung 25 auf. Es ist des Weiteren denkbar, dass die Systemfräsung 21 auch einen Einführbereich 24 umfasst. Der Einführbereich 24 ist vorteilhaft an einem Endbereich des Schienenelementes 20 ausgebildet und dient für ein einfaches und prozesssicheres Einbringen des Befestigungselementes 10, insbesondere des Einrastabschnittes 12 in die Längsnut 22 des Schienenelementes 20. Der Einführbereich 24 ist frei von Rastausnehmungen 23. Der Einführbereich 24 des Schienenelementes 20 gemäß der Figuren 7 und 8 weist keinen Hinterschnitt auf.

Um das Befestigungselement 10, insbesondere den Einrastabschnitt 12 in die Längsnut 22 des Schienenelementes 20 einzubringen, bietet sich das Einsetzen des Einrastabschnittes 12 über den Einführbereich 24 an. Das bedeutet, dass der Nutzer des Ladungssicherungssystems 1 das Befestigungselement 10 insbesondere am Halteabschnitt 11 festhält (einhändig) und dieses von oben (Bildebene) in die Nut im Einführbereich 24 einsetzt und eine Drucckraft größer als die Federkraft der Federelemente 13 auf das Befestigungselement 10 ausübt. Dadurch wird das Befestigungselement 10 in Richtung Längsnutboden 27 gedrückt, vorteilhaft so lange bis die Einrastnasen 17 unterhalb der Hinterschnittwandung 25 entlang gleiten können. Dann verschiebt der Nutzer unter Anwendung einer ergänzenden Zugkraft oder Schubkraft das Befestigungselement 10 entlang der Längsnut 22 in Schienenelementlängsrichtung SL so weit bis das Befestigungselement 10 eine für den Nutzer gewünschte Position erreicht und gleichzeitig die Einrastnasen 16 unterhalb der entsprechenden Rastausnehmungen 23 sichtbar werden. Daraufhin reduziert der Nutzer seine aufgebrachte Druckkraft derart, dass die Federkraft der Federelemente 13 eine Bewegung des Befestigungselementes 10 weg von dem Längsnutgrund 27 verursacht, wodurch die Einrastnasen 17 in die Rastausnehmungen 23 hinein bewegt werden. Bei vollständigem Lösen der Druckkraft durch den Nutzer greifen die Einrastnasen 17 in die gewünschten Rastausnehmungen 23 ein und die Gleitschuh-Vorsprünge 16 kontaktieren eine Innenseite der Hinterschnittwandungen 25 zumindest abschnittsweise. Dann befindet sich das Befestigungselement 10 in einer arretierten bzw. fixierten Position, in welcher eine ungewollte Bewegung in keine Richtung mehr stattfinden kann.

Allgemein zu allen Ausführungsformen des erfindungsgemäßen Ladungssicherungssystems 1 ist anzumerken, dass ein Gleiten des Befestigungselementes 10 entlang der Längsnut 22 bis zur nächsten Rastausnehmung 23 auch ohne Aufbringen einer Druckkraft erfolgen kann. Das bedeutet, dass es hierzu lediglich einer Schubkraft oder Zugkraft bedarf, bis das Befestigungselement 10 derart weit bis zur nächstmöglichen Rastausnehmung 23 verschoben wird, dass die wenigstens eine Einrastnase 17 in diese Rastausnehmung 23 eingreift, wodurch ein im Wesentlichen selbsttätiges Einrasten des Befestigungselementes 10 in das Schienenelement 20 erfolgt.

### Bezugszeichenliste

- 1: Ladungssicherungssystem
- 10: Befestigungselement
- 11: Halteabschnitt
- 12: Einrastabschnitt
- 13: Federelement
- 14: Stift
- 15: Eingriffswandung
- 16: Gleitschuh-Vorsprung
- 17: Einrastnase
- 18: Bohrung / Sacklochbohrung
- 19: Aussparung
- 20: Schienenelement
- 21: Systemfräsung
- 22: hinterschnittene Längsnut
- 22.1: verringert hinterschnittener Längsnutbereich
- 23: Rastausnehmung
- 24: Einführbereich
- 25: Hinterschnittwandung
- 25.1: verringerte Hinterschnittwandung
- 26: Bohrung
- 27: Längsnutgrund / Längsnutboden
- 28: Längsnutseiten / Längsnutwandungen
- BB: Befestigungselementbreitenrichtung
- BH: Befestigungselementhöhenrichtung
- BL: Befestigungselementlängsrichtung
- SB: Schienenelementbreitenrichtung
- SH: Schienenelementhöhenrichtung
- SL: Schienenelementlängsrichtung

## Patentansprüche

1. Ladungssicherungssystem (1) zum Sichern wenigstens eines zu transportierenden Ladegutes auf oder an einem Transportmittel, wobei das Ladungssicherungssystem (1) zumindest
ein Befestigungselement (10) zumindest zum Anordnen des Ladegutes an das Ladungssicherungssystem (1) und ein Schienenelement (20) zumindest zum Anordnen des Ladungssicherungssystems (1) an dem Transportmittel umfasst,
und wobei
das Befestigungselement (10) einen mit dem Ladegut mittelbar oder unmittelbar verbindbaren Halteabschnitt (11) und einen mit dem Schienenelement (20) unmittelbar verbindbaren Einrastabschnitt (12) aufweist, wobei der Einrastabschnitt (12) zumindest ein Federelement (13) zum Selbstsichern des Befestigungselementes (10) in dem Schienenelement (20) umfasst
**dadurch gekennzeichnet, dass**
das Schienenelement (20) eine derart gering dimensionierte maximale Breite, insbesondere eine maximale Breite von 20 mm, aufweist, dass ein nachrüstbarer Einbau des Ladungssicherungssystems (1) bei geringem Platzangebot und/oder an bestehenden Fahrzeugeinrichtungen ermöglicht ist.

2. Ladungssicherungssystem (1) gemäß Anspruch 1,
**dadurch gekennzeichnet, dass**
das Schienenelement (20) eine Systemfräsung (21) aufweisend eine sich zumindest abschnittsweise erstreckende hinterschnittene Längsnut (22) mit zueinander ausgerichteten Hinterschnittwandungen (25) sowie eine Mehrzahl an zueinander in Längsrichtung des Schienenelementes (20) gleich beabstandet im Bereich zumindest einer der Hinterschnittwandungen (25) ausgebildeten Rastausnehmungen (23) umfasst.

3. Ladungssicherungssystem (1) gemäß Anspruch 2,
**dadurch gekennzeichnet, dass**
der Einrastabschnitt (12) und der Halteabschnitt (11) einstückig ausgebildet sind und der Einrastabschnitt (12) innerhalb der Systemfräsung (21) zumindest abschnittsweise gleitend beweglich oder arretiert angeordnet ist.

4. Ladungssicherungssystem (1) gemäß einem der vorangegangenen Ansprüche,
**dadurch gekennzeichnet, dass**
der Einrastabschnitt (12) wenigstens eine Eingriffswandung (15), zumindest eine sich zumindest abschnittsweise von der Eingriffswandung (15) weg erstreckende Einrastnase (17) sowie jeweils einen sich von den sich gegenüberliegenden Außenseiten der Eingriffswandung (15) weg erstreckenden Gleitschuh-Vorsprung (16) aufweist.

5. Ladungssicherungssystem (1) gemäß Anspruch 4,
**dadurch gekennzeichnet, dass**
ein Einrastnasen - Paar bestehend aus zwei Einrastnasen (17) derart ausgebildet ist, dass die beiden Einrastnasen (17) des Einrastnasen -Paares jeweils an sich gegenüberliegenden Außenseiten der Eingriffswandung (15) angeordnet sind.

6. Ladungssicherungssystem (1) gemäß einem der vorangegangenen Ansprüche 4 oder 5,
**dadurch gekennzeichnet, dass**
der Gleitschuh-Vorsprung (16) an einem distalen Ende der Eingriffswandung (15) ausgebildet ist, welches dem distalen Ende gegenüberliegt, dass den Halteabschnitt (11) des Befestigungselementes (10) kontaktiert, wobei sich der Gleitschuh-Vorsprung (16) zumindest abschnittsweise orthogonal von der Außenseite der Eingriffswandung (15) derart weit weg erstreckt, dass der Gleitschuh-Vorsprung (16) die entsprechende Hinterschnittwandung (25) der hinterschnittenen Längsnut (22) hintergreift.

7. Ladungssicherungssystem (1) gemäß einem der vorangegangenen Ansprüche 4 bis 6, **dadurch gekennzeichnet, dass**
die wenigstens eine Einrastnase (17) sich zumindest abschnittsweise orthogonal von einer Außenseite der Eingriffswandung (15) in einem zwischen dem Gleitschuh-Vorsprung (16) und dem Halteabschnitt (11) befindlichen Abschnitt der Eingriffswandung (15) weg erstreckt.

8. Ladungssicherungssystem (1) gemäß einem der vorangegangenen Ansprüche 4 bis 7, **dadurch gekennzeichnet, dass**
das Befestigungselement (10) wenigstens ein als Druckfederelement ausgebildetes Federelement (13), welches zumindest abschnittsweise innerhalb der Eingriffswandung (15) des Einrastabschnittes (12) angeordnet ist oder zwei als Blattfederelemente ausgebildete Federelemente (13), welche sich jeweils außerhalb der Eingriffswandung (15) von der Eingriffswandung (15) weg erstrecken, aufweist.

9. Ladungssicherungssystem (1) gemäß einem der vorangegangenen Ansprüche,
**dadurch gekennzeichnet, dass**
der Halteabschnitt (11) des Befestigungselementes (10) eine langlochförmige oder kreisförmige oder ovale Aussparung (19) zur Anordnung eines Gurtbandes oder Hakens oder vergleichbarer Ladungssicherungselemente und/oder ein Gewinde und/oder Klemmmittel zur Anordnung eines Ladungssicherungselementes aufweist.

10. Verfahren zum Sichern von wenigstens einem zu transportierenden Ladegut auf oder an einem Transportmittel, wobei das Verfahren zumindest die folgende Schritte umfasst:
- Anordnen, insbesondere Nachrüsten, des Ladungssicherungssystems (1) nach wenigstens Anspruch 4 derart, dass
- das Schienenelement (20) mittelbar oder unmittelbar mit dem Transportmittel verbunden wird,
- das Befestigungselement (10) in das Schienenelement (20), insbesondere in die hinterschnittene Längsnut (22) eingeschoben wird, wobei das Befestigungselement (10) in Richtung des Längsnutbodens (27) der hinterschnittenen Längsnut (22) gegen eine Federkraft des wenigstens einen Federelementes (13) mittels einer aufbrachten Druckkraft gedrückt und gleichzeitig entlang der hinterschnittenen Längsnut (22) verschoben wird,
- das Befestigungselement (10) derart weit verschoben wird, bis die wenigstens eine Einrastnase (17) unterhalb einer gewünschte Rastausnehmung (23) sichtbar wird, und
- die aufgebrachte Druckkraft derart verringert wird, dass die Federkraft des wenigstens einen Federelementes (13) das Befestigungselement (10) orthogonal zur Längsnut (22) aus der Längsnut (22) derart weit heraus bewegt, dass die wenigstens eine Einrastnase (17) in die gewünschte Rastausnehmung (23) eingreift, wobei die Gleitschuh-Vorsprünge (16) zumindest abschnittsweise eine innenliegenden Fläche der Hinterschnittwandungen (25) der hinterschnittenen Längsnut (22) kontaktieren.
